# EUROPÄISCHE PATENTSCHRIFT

(11) **EP 3 388 301 B1**
(45) Veröffentlichungstag und Bekanntmachung des Hinweises auf die Patenterteilung: **15.10.2025**
(21) Anmeldenummer: 17166602.7
(22) Anmeldetag: 13.04.2017
(51) Int. Cl.: B60W 50/00, G05D 1/00, G08G 1/00

(54) **SYSTEM ZUR DYNAMISCHEN STEUERUNG UND REGELUNG VON FAHRZEUGFUNKTIONEN**
SYSTEM FOR DYNAMIC CONTROL AND REGULATION OF VEHICLE FUNCTIONS
SYSTÈME DE COMMANDE DYNAMIQUE ET DE RÉGLAGE DE FONCTIONS DE VÉHICULE

(43) Veröffentlichungstag der Anmeldung: 17.10.2018
(73) Patentinhaber: Bayerische Motoren Werke Aktiengesellschaft, 80809 München (DE)
(72) Erfinder: Rein, Lorenz, 81377 München (DE); Schmaderer, Kristina, 93083 Obertraubling (DE); Wiedemann, Francesco, 80801 München (DE); Leisin, Anna-Christina, 80337 München (DE)

(56) Entgegenhaltungen:
- DE-A1- 102014 224 108
- US-A1- 2012 164 989
- US-A1- 2014 172 727
- US-A1- 2015 178 034
- US-A1- 2015 339 928
- US-A1- 2016 364 823

## Beschreibung

Die vorliegende Erfindung betrifft ein System und ein Verfahren zur dynamischen Steuerung und Regelung von Fahrzeugfunktionen einer Vielzahl von Fahrzeugen.

Systeme, die es Nutzern in Echtzeit ermöglichen, eine Vielzahl von Fahrzeugen mit deren Fahrern gemeinschaftlich zu nutzen, so genanntes Ridesharing bzw. Real-Time Ridesharing bzw. On-Demand Ridesharing, sind bekannt. Solche Konzepte sind unter Nutzung moderner technologischer Errungenschaften, insbesondere unter Verwendung von Navigationssatellitensystemen zur Positionsbestimmung, z.B. Global Positioning System (GPS), Global Navigation Satellite System (GLONASS), Galileo, Beidou, etc., in der entsprechenden Fahrzeugflotte und/oder in entsprechenden mobilen Endgeräten, insbesondere Smartphones, können solche Ridesharing-Konzepte realisiert werden. Nachteilig daran ist, dass Nutzer von Ridesharing-Diensten eher als Nutzer einer Mitfahrgelegenheit in einem dem Fahrer zugeordneten Fahrzeug gelten, so dass sich der Einsatz der Technologie auf das Buchen von Mitfahrgelegenheiten in Echtzeit beschränkt und keine weitere technische Interaktion möglich ist.

Die US 2015/339928 A1 beschreibt das Betreiben einer Flotte autonomer Fahrzeuge. Eine Anfrage für einen Taxidienst kann von einer mobilen Vorrichtung empfangen werden. Die Anfrage kann einen aktuellen Standort der mobilen Vorrichtung enthalten. Ein autonomes Fahrzeug kann aus der Flotte autonomer Fahrzeuge ausgewählt werden, um den Taxidienst teilweise auf der Grundlage der Verfügbarkeit des autonomen Fahrzeugs und der Nähe zwischen dem autonomen Fahrzeug und dem aktuellen Standort der mobilen Vorrichtung durchzuführen.

Die US 2015/185034 A1 beschreibt eine gemeinsame Nutzung von Fahrzeugen. Ein verifizierter Benutzer kann Einzelheiten seines Fahrtwunsches vorgeben. Der verifizierte Benutzer kann insbesondere einen gewünschten Fahrzeugtyp und eine Kategorie von Fahrern vorgeben.

DE 10 2015 219 463 A1 betrifft das Verwenden eines intelligenten Valet-Parksystems für ein Fahrzeug. Ein automatischer Valet-Modus kann es einem Nutzer ermöglichen, sein/ihr Automobil geparkt zu lassen und, wenn das Fahrzeug erneut benötigt wird, vom Aufenthaltsort des Nutzers abgeholt zu werden. Zudem können andere Merkmale aktiviert werden, einschließlich Klimasteuerung, Motorsteuerung, Fenster/-Schiebedachsteuerung, Fahrzeugdatenextraktion (z.B. Parkposition, Kraftstoffinformationen usw.),

Scheibenwischersteuerung. US 2015/0339928 A1, US 2016/364823 A1 und US 2014/172727 A1 zeigen Taxidienste und konfigurieren Fahrzeugfunktionen entsprechend gegebener Nutzerprofile bevor der Nutzer abgeholt wird. US 2012/0164989 A1 lässt den Fahrer Nutzerprofile am Smartphone anlegen.

Die Aufgabe der Erfindung besteht darin, die vorstehend genannten Nachteile zu vermeiden und eine Lösung zu schaffen, die Nutzern von Real-Time Ride-Sharing Diensten die Möglichkeit bietet, vor der jeweiligen Fahrt auf die Fahrzeugfunktionen des Fahrzeugs einzuwirken, um einen möglichst hohen Fahr-Komfort zu erzielen.

Diese Aufgabe wird erfindungsgemäß durch die Merkmale der unabhängigen Ansprüche gelöst. Bevorzugte Ausführungsformen sind Gegenstand der abhängigen Ansprüche.

Gemäß einem ersten Aspekt der Erfindung wird ein System zur dynamischen Steuerung und/oder Regelung von Fahrzeugfunktionen einer Vielzahl von Fahrzeugen bereitgestellt, wobei jedes Fahrzeug eine zentrale Kommunikationseinheit aufweist, umfassend:
zumindest einen Backend-Server;
zumindest ein Endgerät, das eingerichtet ist, einen Fahr-Request an den Backend-Server zu senden, wobei der Fahr-Request zumindest eine Startposition, eine Auswahl eines Fahrzeugtyps aus der Vielzahl von Fahrzeugen sowie zumindest eine Anforderung zur Steuerung und/oder Regelung zumindest einer Fahrzeugfunktion entsprechend einer Nutzereingabe in eine Eingabeschnittstelle am Endgerät umfasst;
wobei der Backend-Server eingerichtet ist, nach Empfangen des Fahr-Requests ein Fahrzeug entsprechend dem Fahrzeugtyp auszuwählen und eine Fahr-Anforderung umfassend die Anforderung zur Steuerung und/oder Regelung zumindest einer Fahrzeugfunktion an die zentrale Kommunikationseinheit des ausgewählten Fahrzeugs zu senden; und
wobei die zumindest eine Fahrzeugfunktion des ausgewählten Fahrzeugs entsprechend der Anforderung zur Steuerung und Regelung im Fahrzeug-Request gesteuert und/oder geregelt wird,
wobei, für den Fall, dass eine entsprechende Fahrzeugfunktion nicht steuer- bzw. regelbar ist, kann die zentrale Kommunikationseinheit eine entsprechende Nachricht generiert und über den Backend-Server an das Endgerät ausgibt, wobei einem Nutzer des Endgeräts dann die Möglichkeit bereitgestellt wird, die Nutzung des Ridesharing-Dienstes trotz der nicht vorhandenen Fahrzeugfunktion über den Backend-Server zu bestätigen oder ein anderes Fahrzeug, welches die entsprechende Fahrzeugfunktion bereitstellen kann, die Nutzung des Ridesharing-Dienstes auszuwählen.

Bei den Fahrzeugen kann es sich insbesondere um Kraftfahrzeuge mit beliebigem Antrieb (z.B. Verbrenner, Plug-In Hybrid, Elektroantrieb, etc.) handeln. Zumindest ein Teil der Kraftfahrzeuge kann zumindest einen teil-autonomen, aber auch einen voll-autonomen Fahrmodus aufweisen. Es können dabei vom Backend-Server Fahrzeugtypen der Vielzahl von Fahrzeugen unter vorbestimmten Kriterien angezeigt werden, z.B. 7-Sitzer, Sports Activity Vehicle, Cabrio, Coupe, Sportwagen, etc.

Jedes Fahrzeug der Vielzahl von Fahrzeugen weist eine zentrale Kommunikationseinheit auf. Die Zentrale Kommunikationseinheit umfasst zumindest ein Teilnehmeridentitätsmodul bzw. ein Subscriber Identity Module bzw. eine SIM-Karte, welches dazu dient, eine Kommunikationsverbindung über ein Mobilfunksystem aufbauen zu können. Das Teilnehmeridentitätsmodul identifiziert dabei die Kommunikationseinheit eindeutig im Mobilfunknetz.

Die Kommunikationsverbindung kann z.B. über Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), World Wide Interoperability for Microwave Access (WIMAX) und/oder 5G-Mobilfunksysteme drahtlos hergestellt werden. Darüber hinaus oder alternativ dazu ist das Kommunikationsmodul ausgestaltet, eine Kommunikationsverbindung über alle gängigen und künftigen Kommunikationstechnologien, z.B. WiFi, Bluetooth, NFC, WiMAX, herzustellen bzw. aufzubauen. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln.

Jede zentrale Kommunikationseinheit kann dabei eingerichtet sein, lediglich eine Kommunikationsverbindung mit dem Backend-Server bzw. Server zuzulassen. Vor einem möglichen Aufbau einer Kommunikationsverbindung kann es zudem erforderlich sein, dass das Fahrzeug bzw. das entsprechende Kommunikationsmodul einmalig beim Backend-Server registriert wird, beispielsweise über einen entsprechenden Registrierungsvorgang eines berechtigten Nutzers des Fahrzeugs (z.B. Besitzer des Fahrzeugs). Mit anderen Worten ist eine vorherige einmalige Registrierung jedes Fahrzeugs aus der Vielzahl von Fahrzeugen am Backend-Server erforderlich. Vorteilhafter Weise kann so sichergestellt werden, dass lediglich über den Backend-Server eingehende Fahr-Requests umfassend zumindest eine Anforderung zur Steuerung und/oder Regelung zumindest einer Fahrzeugfunktion die Steuerung und/oder Regelung der entsprechenden Fahrzeugfunktion im Fahrzeug durchführen können. Dadurch werden vorteilhafter Weise nicht autorisierte Manipulationen der entsprechenden Fahrzeugfunktionen verhindert. Bei dem einmaligen Registrierungsvorgang können technische Parameter des Fahrzeugs und optional weitere, je nach Kontext erforderliche Daten (z.B. Daten hinsichtlich eines Besitzers und/oder Fahrers des entsprechenden Fahrzeugs bzw. eines Mitfahrers bei Fahrzeugen mit zumindest einem zumindest teilautonomen Fahrmodus) am Backend-Server erfasst und in einer Speichereinheit, z.B. einer Datenbank, hinterlegt werden. Bei den technischen Parametern kann es sich insbesondere um technische Parameter mit Bezug auf die Fahrzeugfunktionen handeln. Vorteilhafter Weise kann dadurch bereits am Backend-Server für jedes Fahrzeug erfasst und hinterlegt werden, welche Fahrzeugfunktionen das Fahrzeug bereitstellt.

Jedes Fahrzeug kann dem Backend-Server seine aktuelle Position, z.B. über die zentrale Kommunikationseinheit, die ein entsprechendes Positionsbestimmungsmodul, z.B. GPS-Modul aufweisen kann, in vorbestimmbaren bzw. vorbestimmten zeitlichen Abständen (z.B. jede Minute, alle 5 Minuten, etc.) und/oder zu vorbestimmbaren bzw. vorbestimmten Ereignissen (z.B. Fahrzeugstart, Fahrzeugstopp, Beginn einer Fahrt, Ende einer Fahrt, etc.) senden. Vorteilhafter Weise kann so der Backend-Server stets die aktuelle Position aller registrierten Fahrzeuge bestimmen.

Die Kommunikation zwischen dem Endgerät, dem Backend-Server sowie dem Fahrzeug kann beispielsweise im Sinne des Client-Server-Paradigma (Request/Anfrage-Response/Antwort-Prinzip) realisiert werden.

Bei dem Backend-Server kann es sich um einen Carsharing-Dienstanbieter, insbesondere aber einen Ridesharing-Dienstanbieter handeln, der Ridesharing-Dienste einer Vielzahl von registrierten Fahrzeugen über ein geeignetes Kommunikationssystem (z.B. Mobilfunknetz und/oder Internet) bereitstellt.

Um einen Ridesharing-Dienst des Backend-Servers nutzen zu können, kann es zwingend erforderlich sein, dass sich jeder Nutzer des Ridesharing-Dienstes einmalig über ein Endgerät beim Backend-Server registriert, wobei entsprechende Daten des Nutzers (z.B. Nutzer-Credentials, Zahlungsdaten, etc.) erfasst und in einer entsprechenden Speichereinheit, z.B. einer Datenbank, hinterlegt werden.

Bei dem Endgerät kann es sich um ein stationäres Endgerät, z.B. Laptop, PC, etc. oder um ein mobiles Endgerät handeln. Bei dem mobilen Endgerät kann es sich um insbesondere um Smartphones, aber auch andere mobile Geräte wie z.B. Handys, Personal Digital Assistants (PDAs), Tablet PCs sowie alle gängigen sowie künftigen elektronischen Geräte, welche mit einer Technologie zum Laden und Ausführen von Apps und/oder zum Laden und Ausführen von Internet-Browsern ausgestattet sind, handeln.

Darüber hinaus oder alternativ dazu kann es sich bei dem Endgerät auch um eine Augmented Reality (AR), Virtual Reality (VR), Mixed Reality (MR)-Brille bzw. AR, VR oder MR-Kontaktlinsen handeln, über die der Nutzer des entsprechenden Endgeräts den Fahr-Request an den Backend-Server senden kann.

Nach erfolgreich abgeschlossenem, einmaligen Registrierungsvorgang seitens des Fahrzeuges und seitens jedes Nutzers des Ridesharing-Dienstes kann sich jeder Nutzer über jedes beliebige Endgerät einloggen (Nutzer-Credentials) und über das Endgerät einen Fahr-Request an den Backend-Server senden. Der Fahr-Request umfasst zumindest eine Startposition sowie zumindest eine Anforderung zur Steuerung und/oder Regelung zumindest einer Fahrzeugfunktion. Beispielsweise können entsprechend registrierte und fahrbereite Fahrzeuge über eine geeignete Ausgabeeinheit des Endgeräts in einer vorbestimmten bzw. vorbestimmbaren geografischen Umgebung einer Startposition (z.B. Umkreis von 5 Kilometern), beispielsweise auf einer digitalen Karte, angezeigt werden.

Der Nutzer des Endgeräts kann die Startposition beispielsweise mithilfe einer entsprechenden Mensch-Maschine-Schnittstelle im Endgerät eingeben (z.B. da kein Positionsbestimmungsmodul, z.B. GPS, im Endgerät vorhanden ist und/oder wenn die Startposition von einer aktuellen Position des Endgeräts abweicht). In einem anderen Beispiel kann die Startposition die aktuelle geografische Position des Nutzers des Endgeräts sein, welche von einem auf bzw. in dem Endgerät umfassten Positionsbestimmungsmodul (z.B. GPS-Modul) ermittelt und entsprechend übertragen wird. Der Nutzer des Endgeräts kann in einem weiteren Schritt einen Fahrzeugtyp aus der Vielzahl von Fahrzeugen auswählen.

In einem weiteren Schritt können dem Nutzer des Endgeräts Fahrzeugfunktionen, die beispielsweise den hinterlegten technischen Parametern entsprechen, und die manipulierbar (steuerbar und/oder regelbar) sind, angezeigt werden. Der Nutzer des Endgeräts kann nun zumindest eine Manipulation der entsprechenden Fahrzeugfunktionen durchführen. Dieser Vorgang entspricht einer Anforderung zur Steuerung und/oder Regelung der zumindest einen Fahrzeugfunktion. Das Endgerät erstellt nun basierend auf der Anforderung zur Steuerung und/oder Regelung der zumindest einen Fahrzeugfunktion einen Fahr-Request umfassend die Startposition sowie die Anforderung zur Steuerung und/oder Regelung der zumindest einen Fahrzeugfunktion und sendet bzw. übermittelt diesen an den Backend-Server. Der Backend-Server wird nun ein Fahrzeug entsprechend dem Fahrzeugtyp auswählen und eine Fahr-Anforderung umfassend zumindest die Anforderung zur Steuerung und/oder Regelung der zumindest einen Fahrzeugfunktion erstellen und an die zentrale Kommunikationseinheit des durch den Backend-Server des Ridesharing-Dienstes ausgewählten Fahrzeugs senden. Die zentrale Kommunikationseinheit wird die Fahr-Anforderung entsprechend verarbeiten und die zumindest eine Fahrzeugfunktion entsprechend der Anforderung zur Steuerung und/oder Regelung steuern und/oder regeln. Die zentrale Kommunikationseinheit kann beispielsweise auf einer Steuereinheit bzw. einem Steuergerät realisiert sein, die in der Lage ist, die entsprechenden Fahrzeugfunktionen zu steuern bzw. zu regeln. In einem anderen Beispiel kann die zentrale Kommunikationseinheit auf einer Steuereinheit bzw. einem Steuergerät realisiert sein, die mit ein oder mehreren weiteren Steuereinheiten und/oder Steuergeräten im Fahrzeug kommunikativ verbunden ist, welche ausgebildet sind, die Fahrzeugfunktion zu steuern bzw. zu regeln.

Vorteilhafter Weise kann so jeder Nutzer eines (registrierten) Endgeräts Fahrzeugfunktionen einer Vielzahl von Fahrzeugen sicher und dynamisch über den Backend-Server steuern bzw. regeln.

Vorzugsweise umfasst die zumindest eine Fahrzeugfunktion des Fahrzeugs:
- zumindest eine Klimatisierung bzw. Temperaturregelung;
- eine Steuerung des Radios;
- eine Steuerung von Multimediainhalten;
- zumindest eine Sitzheizung;
- zumindest eine Sitzbelüftung;
- zumindest eine Sitzkühlung;
- zumindest eine Sitzposition;
- zumindest einen Fahrmodus; und/oder
- ein Navigationssystem des Fahrzeugs.

Multimediainhalte umfassen beispielsweise Streaming-Dienste von Musik- und/oder Video-Inhalten, aber auch alle weiteren gängigen und künftigen Multimediainhalte.

Beispielsweise kann dem Nutzer des Ridesharing-Dienstes eine Liste von Fahrzeugfunktionen, die beim ausgewählten Fahrzeug manipuliert (d.h. gesteuert und/oder geregelt) werden können, über eine Ausgabeeinheit des Endgeräts angezeigt werden. Der Nutzer des Ridesharing-Dienstes kann nun entsprechend geeignete Einstellungen vornehmen. Beispielsweise kann der Nutzer eine gewünschte Fahrzeuginnenraumtemperatur über eine entsprechende Eingabeschnittstelle am Endgerät eingeben. Im Fahrzeug werden dann Heizung und/oder Klimaanlage derart geregelt, dass die gewünschte Fahrzeuginnenraumtemperatur erreicht und beibehalten wird. Darüber hinaus oder alternativ dazu kann der Nutzer des Endgeräts einen gewünschten Radiosender und optional eine gewünschte Lautstärke eingeben. Ein Radiomodul im ausgewählten Fahrzeug wird dann derart gesteuert, dass der gewünschte Radiosender und optional die entsprechende Lautstärke eingestellt werden. Darüber hinaus oder alternativ dazu kann der Nutzer des Endgeräts weitere Multimedia-Inhalte auswählen. Die entsprechende Multimedia-Einheit im Fahrzeug wird dann derart gesteuert, dass der Multimedia-Inhalt gestartet und/oder eingestellt wird. Darüber hinaus oder alternativ dazu kann der Nutzer des Endgeräts eingeben, dass er eine Sitzheizung und/oder eine Sitzbelüftung und/oder eine Sitzkühlung und/oder eine bestimmte Sitzeinstellung wünscht. Die entsprechenden, die Funktionalität bereitstellenden Einheiten (z.B. Steuergeräte bzw. Software-Module, die Teil eines zentralen Steuergeräts oder als separate Steuergeräte im Fahrzeug realisiert sein können) im Fahrzeug werden dann derart gesteuert, dass die Fahrzeugfunktion entsprechend eingestellt wird. Darüber hinaus oder alternativ dazu kann der Nutzer des Endgeräts einen bestimmten Fahrmodus, z.B. "komfortables Fahren", "dynamisches Fahren", etc. eingeben. Das entsprechende, die Funktionalität bereitstellende Steuermodul im Fahrzeug wird dann derart gesteuert, dass der Fahrmodus im Fahrzeug eingestellt wird. Darüber hinaus oder alternativ dazu kann der Nutzer des Endgeräts eine Zielposition eingeben. Die Zielposition kann dann automatisch durch das Navigationssystem des Fahrzeugs übernommen werden.

Es handelt sich hierbei lediglich um beispielhafte Fahrzeugfunktionen, es können alle geeigneten, gängigen und künftigen Fahrzeugfunktionen zu der o.g. Aufzählung hinzugefügt werden.

Jede der Fahrzeugunktionen kann beim einmaligen Registrierungsvorgang beim Backend-Server über die technischen Parameter des Fahrzeugs erfasst und den Nutzern des Endgeräts über eine Ausgabeeinheit angezeigt werden.

Vorzugsweise umfasst die Fahr-Anforderung des Backend-Servers zudem die Startposition, so dass das ausgewählte Fahrzeug zur Startposition bewegt werden kann.

Bei den Fahrzeugen, die beim Backend-Server einmalig registriert sind, kann es sich um Fahrzeuge handeln, die einen Fahrer zum Bewegen des Fahrzeugs erfordern. Darüber hinaus oder alternativ dazu kann es sich bei den Fahrzeugen um Fahrzeuge handeln, die zumindest einen zumindest teil-autonomen, aber auch einen voll-autonomen Fahrmodus aufweisen. Durch die Übermittlung der Startposition mit der Fahr-Anforderung des Backend-Servers kann der Fahrer des entsprechenden Fahrzeuges das Fahrzeug an die Startposition bewegen bzw. fahren, um dem Nutzer des Ridesharing-Dienstes diesen zur Verfügung zu stellen. Fahrzeuge mit einem voll-autonomen Fahrmodus können sich nach Übermittlung der Startposition voll-autonom an die Startposition bewegen, um dem Nutzer des Ridesharing-Dienstes diesen zur Verfügung zu stellen. Wie bereits oben ausgeführt, kann es sich bei der Startposition um eine geografische Position, z.B. GPS-Position, handeln, die der Nutzer des Ridesharing-Dienstes entweder manuell eingegeben und/oder durch ein Positionsbestimmungsmodul (z.B. GPS-Modul des Endgeräts) automatisch übernommen wurde.

Vorzugsweise umfassen der Fahr-Request und die Fahr-Anforderung zudem einen Startzeitpunkt, so dass das ausgewählte Fahrzeug zum Startzeitpunkt an die Startposition bewegt werden kann.

Falls der Nutzer des Ridesharing-Dienstes nicht sofort, sondern erst zu einem späteren Zeitpunkt den Ridesharing-Dienst (entweder selbst, oder durch eine andere Person) nutzen möchte, kann der Nutzer zudem einen Startzeitpunkt (z.B. über eine entsprechende Datums- und Uhrzeiteingabe über das Endgerät) eingeben. Vorteilhafter Weise können so Fahrten mit dem Ridesharing-Dienst frühzeitig geplant werden.

Vorzugsweise gehört die Vielzahl an Fahrzeugen zu einer Ridesharing-Fahrzeugflotte.

Wie bereits oben erwähnt, können die Fahrzeuge einer Ridesharing-Fahrzeugflotte angehören. Dabei kann es zwingend erforderlich sein, dass sich das Fahrzeug einmalig beim Backend-Server registriert.

Gemäß den Ausführungsformen der vorliegenden Erfindung wird es somit dem Nutzer des Endgeräts ermöglicht, manipulierbare (d.h. steuerbare bzw. regelbare) Fahrzeugfunktionen gemäß seinen persönlichen Vorlieben bzw. Anforderungen zu steuern bzw. zu regeln. Dadurch erhöht sich auch der Komfort der Nutzer der Ridesharing-Dienste.

Gemäß einem zweiten Aspekt der vorliegenden Erfindung wird die zugrunde liegende Aufgabe durch ein Verfahren zur dynamischen Steuerung und/oder Regelung von Fahrzeugfunktionen gelöst, wobei jedes Fahrzeug eine zentrale Kommunikationseinheit aufweist, umfassend:
Empfangen, an einem Backend-Server eines Fahr-Requests von einem Endgerät, wobei der Fahr-Request zumindest eine Startposition, eine Auswahl eines Fahrzeugtyps aus der Vielzahl von Fahrzeugen sowie zumindest eine Anforderung zur Steuerung und/oder Regelung zumindest einer Fahrzeugfunktion entsprechend einer Nutzereingabe in eine Eingabeschnittstelle am Endgerät umfasst;
Auswählen, durch den Backend-Server, eines Fahrzeugs, das dem Fahrzeugtyp entspricht;
Erstellen und Senden einer Fahr-Anforderung umfassend die Anforderung zur Steuerung und/oder Regelung der zumindest einen Fahrzeugfunktion an die zentrale Kommunikationseinheit des ausgewählten Fahrzeugs; und
Automatisches Steuern und/oder Regeln der zumindest einen Fahrzeugfunktion im ausgewählten Fahrzeug entsprechend der empfangenen Anforderung,
wobei für den Fall, dass eine entsprechende Fahrzeugfunktion nicht steuer- bzw. regelbar ist, kann die zentrale Kommunikationseinheit eine entsprechende Nachricht generiert und über den Backend-Server an das Endgerät ausgibt, wobei einem Nutzer des Endgeräts dann die Möglichkeit bereitgestellt wird, die Nutzung des Ridesharing-Dienstes trotz der nicht vorhandenen Fahrzeugfunktion über den Backend-Server zu bestätigen oder ein anderes Fahrzeug, welches die entsprechende Fahrzeugfunktion bereitstellen kann, die Nutzung des Ridesharing-Dienstes auszuwählen.

Vorzugsweise umfasst die zumindest eine Fahrzeugfunktion des Fahrzeugs:
- zumindest eine Klimatisierung bzw. Temperaturregelung;
- eine Steuerung des Radios;
- eine Steuerung von Multimediainhalten;
- zumindest eine Sitzheizung;
- zumindest eine Sitzbelüftung;
- zumindest eine Sitzkühlung;
- zumindest eine Sitzposition;
- zumindest einen Fahrmodus; und/oder
- ein Navigationssystem des Fahrzeugs.

Vorzugsweise umfasst die Fahr-Anforderung des Backend-Servers zudem die Startposition, so dass das ausgewählte Fahrzeug zur Startposition bewegt werden kann.

Vorzugsweise umfassen der Fahr-Request und die Fahr-Anforderung zudem einen Startzeitpunkt, so dass das ausgewählte Fahrzeug zum Startzeitpunkt an die Startposition bewegt werden kann.

Vorzugsweise gehört die Vielzahl an Fahrzeugen zu einer Ridesharing-Fahrzeugflotte.

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein beispielhaftes Verfahren zur dynamischen Steuerung und Regelung von Fahrzeugfunktionen einer Vielzahl von Fahrzeugen;
- **Fig. 2**: zeigt ein beispielhaftes System zur dynamischen Steuerung und/oder Regelung von Fahrzeugfunktionen einer Vielzahl von Fahrzeugen;
- **Fig. 3**: zeigt eine beispielhafte Anordnung von Fahrzeugmodulen insbesondere mit Bezug auf die zentrale Kommunikationseinheit im Fahrzeug;
- **Fig. 4**: zeigt ein beispielhaftes Endgerät sowie beispielhafte Eingabefelder für die Steuerung von Fahrzeugfunktionen einer Vielzahl von Fahrzeugen.

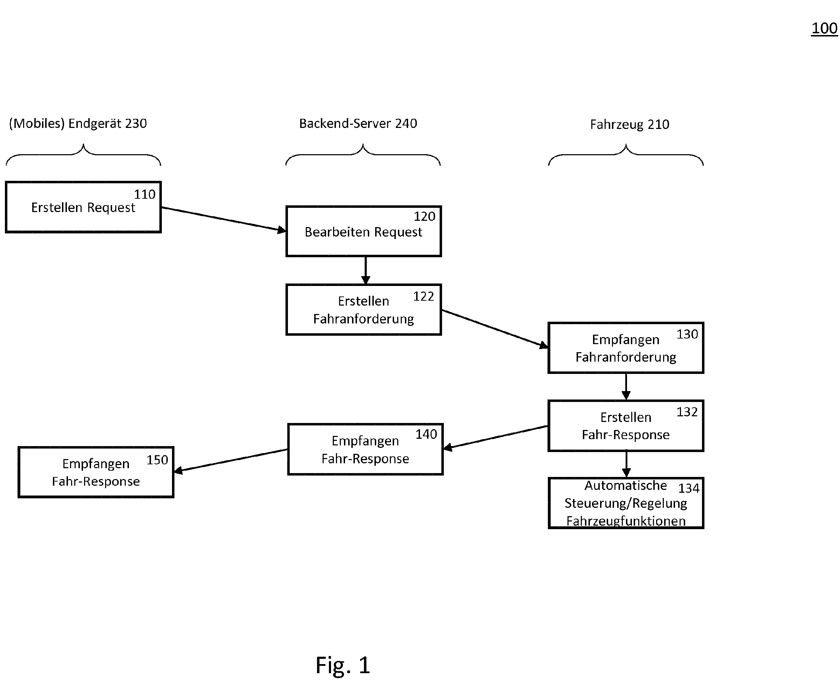

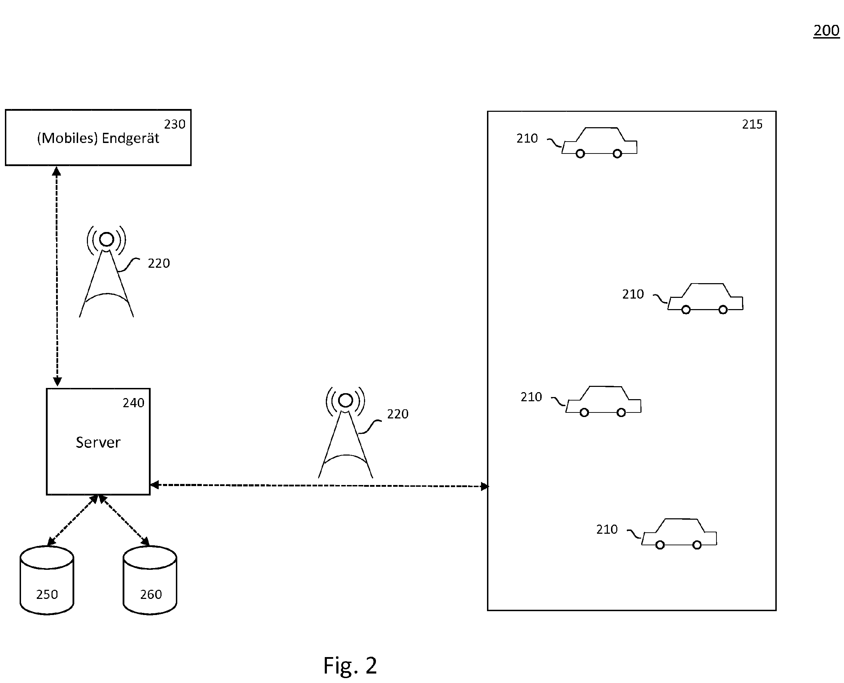

**Figur 1** zeigt ein beispielhaftes Verfahren 100 zur dynamischen Steuerung und/oder Regelung von Fahrzeugfunktionen einer Vielzahl von Fahrzeugen 210. Das Verfahren 100 kann auf einem System 200 ausgeführt werden, wie weiter unten mit Bezug auf **Figur 2** näher erläutert.

Die Kommunikation zwischen dem Endgerät 230, dem Backend-Server 240 sowie dem Fahrzeug 210 kann beispielsweise im Sinne des Client-Server-Paradigma (Request/Anfrage-Response/Antwort-Prinzip) realisiert werden. Bei dem Endgerät kann es sich um ein stationäres Endgerät, oder um ein mobiles Endgerät handeln. Bei dem Backend-Server 240 kann es sich um einen Carsharing-Dienstanbieter, insbesondere aber einen Ridesharing-Dienstanbieter handeln, der Ridesharing-Dienste einer Vielzahl von registrierten Fahrzeugen 210 über ein geeignetes Kommunikationssystem (z.B. Mobilfunknetz und/oder Internet) bereitstellt.

Um einen Ridesharing-Dienst zu nutzen, kann es zwingend erforderlich sein, dass sich jeder Nutzer des Ridesharing-Dienstes, zunächst über ein beliebiges (mobiles) Endgerät 230 bei dem Backend-Server 240 einmalig registriert, wobei entsprechende Daten des Nutzers (z.B. Nutzer-Credentials, Zahlungsdaten, etc.) erfasst und in einer entsprechenden Speichereinheit, z.B. einer Datenbank 250 und/oder 260, hinterlegt werden.

Jedes Fahrzeug 210 umfasst eine zentrale Kommunikationseinheit 310. Die zentrale Kommunikationseinheit 310 kann eingerichtet sein, lediglich eine Kommunikationsverbindung mit dem Backend-Server 240 bzw. Server 240 zuzulassen. Vorteilhafter Weise kann so sichergestellt werden, dass lediglich über den Backend-Server 240 eingehende Fahr-Requests umfassend zumindest eine Anforderung zur Steuerung und/oder Regelung zumindest einer Fahrzeugfunktion 330, 340, 350, 360, 370, 380 die Steuerung und/oder Regelung der entsprechenden Fahrzeugfunktion 330, 340, 350, 360, 370, 380 initiieren können. Dadurch werden anderweitige, unautorisierte Manipulationsversuche der Fahrzeugfunktionen 330, 340, 350, 360, 370, 380 verhindert.

Im Vorfeld kann es darüber hinaus einmalig zwingend erforderlich sein, dass jedes Fahrzeug 210 bzw. das entsprechende Kommunikationsmodul 310 einmalig beim Backend-Server 240 registriert wird, beispielsweise über einen entsprechenden Registrierungsvorgang eines berechtigten Nutzers des Fahrzeugs 210. Mit anderen Worten kann eine vorherige einmalige Registrierung jedes Fahrzeugs 210 der Vielzahl von Fahrzeugen 210 am Backend-Server 240 erforderlich sein. Dadurch werden nicht autorisierte Nutzungen von Fahrzeugen 210 verhindert. Bei dem einmaligen Registrierungsvorgang können zudem technische Parameter des Fahrzeugs 210 und optional weitere, je nach Kontext erforderliche Daten (z.B. Daten hinsichtlich eines Besitzers und/oder Fahrers des entsprechenden Fahrzeugs bzw. eines Mitfahrers bei Fahrzeugen mit zumindest einem zumindest teilautonomen Fahrmodus) erfasst und in einer Speichereinheit, z.B. einer Datenbank 250 und/oder 260, hinterlegt werden. Bei den technischen Parametern kann es sich insbesondere um technische Parameter mit Bezug auf die manipulierbaren, d.h. steuer- bzw. regelbaren Fahrzeugfunktionen 330, 340, 350, 360, 370, 380 handeln. Vorteilhafter Weise kann dadurch bereits am Backend-Server 240 für jedes Fahrzeug erfasst und hinterlegt werden, welche Fahrzeugfunktionen 330, 340, 350, 360, 370, 380 vom Fahrzeug 210 über das mobile Endgerät 230 dynamisch manipulierbar sind. Die Registrierung der Nutzer (über die Enggeräte 230) und der Fahrzeuge 210 sowie die Speicherung der entsprechenden Daten in zumindest einer Datenbank 250 und/oder 260, auf die der Backend-Server 240 Zugriff hat, kann dabei durch ein- und denselben Server 240 realisiert werden. Alternativ dazu können die Registrierungsprozesse sowie die Hinterlegung der entsprechenden Daten durch verschiedene Server (nicht gezeigt) realisiert werden und in verschiedenen Datenbanken 250 bzw. 260 hinterlegt werden (beispielsweise aus Datenschutzgründen).

Jedes Fahrzeug 210 kann dem Backend-Server 240 seine aktuelle Position, z.B. über die zentrale Kommunikationseinheit 310, die ein entsprechendes Positionsbestimmungsmodul, z.B. GPS-Modul, (nicht gezeigt) aufweisen kann, in vorbestimmbaren bzw. vorbestimmten zeitlichen Abständen (z.B. jede Minute, alle 5 Minuten, etc.) und/oder zu vorbestimmbaren bzw. vorbestimmten Ereignissen (z.B. Fahrzeugstart, Fahrzeugstopp, Beginn einer Fahrt, Ende einer Fahrt, etc.) senden, die dort entsprechend hinterlegt bzw. aktualisiert werden können. Vorteilhafter Weise sind dem Backend-Server 240 stets die aktuelle Position aller registrierten Fahrzeuge 210 bekannt.

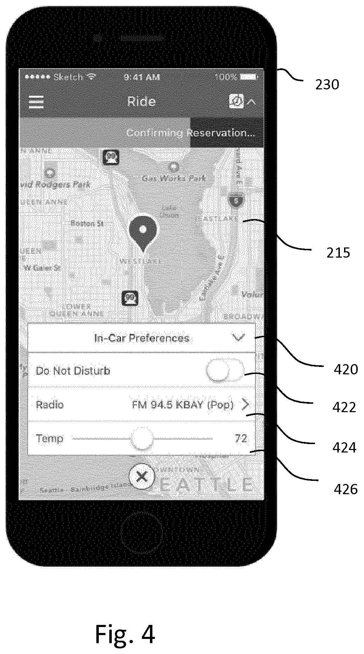

Nach erfolgreich abgeschlossenem, einmaligem Registrierungsvorgang seitens jedes Fahrzeuges 210 und seitens der Nutzer des Ridesharing-Dienstes kann nun, eventuell nach vorherigem Einloggen (Nutzer-Credentials), folgendes Verfahren ausgeführt werden:
Schritt 110: Jeder (registrierte) Nutzer kann eine Fahr-Anfrage bzw. Fahr-Request für die Nutzung des Ridesharing-Dienstes über das mobile Endgerät 230 erstellen und an den Backend-Server 240 senden. Der Fahr-Request umfasst zumindest eine Startposition, zumindest eine Auswahl eines Fahrzeugtyps aus der Vielzahl von Fahrzeugen 210 sowie zumindest eine Anforderung zur Steuerung und/oder Regelung zumindest einer Fahrzeugfunktion 330, 340, 350, 360, 370. Beispielsweise können entsprechend registrierte und fahrbereite Fahrzeuge 210 über eine geeignete Ausgabeeinheit des Endgeräts 230 in einer vorbestimmten bzw. vorbestimmbaren geografischen Umgebung um die Startposition (z.B. Umkreis von 5 Kilometern), beispielsweise auf einer digitalen Karte, angezeigt werden. Beispielsweise kann der Nutzer des Ridesharing-Dienstes die Startposition mithilfe einer entsprechenden Mensch-Maschine-Schnittstelle im Endgerät 230 eingeben (z.B. da kein Positionsbestimmungsmodul, z.B. GPS, im Endgerät 230 vorhanden ist und/oder wenn die Startposition von einer aktuellen Position des Endgeräts 230 abweicht). In einem anderen Beispiel kann die Startposition die aktuelle geografische Position des Nutzers des Ridesharing-Dienstes sein, welche von einem auf bzw. in dem Endgerät 230 umfassten Positionsbestimmungsmodul (z.B. GPS-Modul, nicht gezeigt) ermittelt und entsprechend übernommen wird. Der Nutzer des Endgeräts 230 kann in einem weiteren Schritt einen Fahrzeugtyp auswählen. In einem weiteren Schritt können dem Nutzer des Endgeräts 230 über das Endgerät 230 Fahrzeugfunktionen 330, 340, 350, 360, 370, 380, die beispielsweise den beim Registrierungsprozess hinterlegten technischen Parametern entsprechen, und die der Nutzer des Endgeräts nach seinen persönlichen Vorlieben manipulieren (d.h. steuern und/oder regeln) kann, angezeigt werden (vgl. auch weiter unten, **Figur 4**). Der Nutzer des Endgeräts 230 kann nun zumindest eine Manipulation der entsprechenden Fahrzeugfunktionen 330, 340, 350, 360, 370, 380 über das Endgerät 230 durchführen. Dieser Vorgang entspricht einer Anforderung zur Steuerung und/oder Regelung der zumindest einen Fahrzeugfunktion 330, 340, 350, 360, 370, 380. Das Endgerät 240 erstellt nun basierend auf dem ausgewählten Fahrzeug 210 und der Anforderung zur Steuerung und/oder Regelung der zumindest einen Fahrzeugfunktion 330, 340, 350, 360, 370, 380 einen Fahr-Request umfassend die Startposition sowie die Anforderung zur Steuerung und/oder Regelung der zumindest einen Fahrzeugfunktion330, 340, 350, 360, 370, 380. Der Fahr-Request wird vom Endgerät 230 an den Backend-Server 240 übertragen.
Schritt 120: Der Backend-Server 240 kann den Fahr-Request nach Empfangen entsprechend bearbeiten. Insbesondere wird der Backend-Server 240 ein Fahrzeug auswählen, dass dem durch den Nutzer über das Endgerät 230 ausgewählten Fahrzeugtyp entspricht und optional weitere vorbestimmte Kriterien (z.B. Füllungsgrad des Energiespeichers des Fahrzeugs (Tankfüllung und/oder Ladezustand Batterie), geografische Entfernung, etc.) erfüllt und in Schritt 122 eine Fahranforderung für das ausgewählte Fahrzeug 210 erstellen und an die zentrale Kommunikationseinheit 310 des Fahrzeugs 210 senden. Die Fahranforderung umfasst zumindest die über den Fahr-Request enthaltene Anforderung zur Steuerung und/oder Regelung zumindest einer Fahrzeugfunktion 330, 340, 350, 360, 370, 380.
Schritt 130: Die Fahr-Anforderung wird am ausgewählten Fahrzeug 130, insbesondere an der zentralen Kommunikationseinheit 310 des Fahrzeugs 130, empfangen und entsprechend verarbeitet.
Schritt 132: Das ausgewählte Fahrzeug 210 kann eine Fahr-Response 132 erstellen, die eine Bestätigung oder Ablehnung der Fahr-Anforderung umfasst, und diese an den Backend-Server 230 senden.

In einem weiteren Schritt 134 wird das ausgewählte Fahrzeug 210 die Steuerung und/oder Regelung der zumindest einen Fahrzeugfunktion 330, 340, 350, 360, 370, 380 durchführen. Die zentrale Kommunikationseinheit 310 kann die Fahr-Anforderung entsprechend verarbeiten und die zumindest eine Fahrzeugfunktion 330, 340, 350, 360, 370, 380 entsprechend der Anforderung zur Steuerung und/oder Regelung steuern und/oder regeln. Die zentrale Kommunikationseinheit 310 kann beispielsweise auf einer Steuereinheit bzw. einem Steuergerät 320 realisiert sein, die in der Lage ist, die entsprechenden Fahrzeugfunktionen 330, 340, 350, 360, 370, 380 zu steuern bzw. zu regeln. In einem anderen Beispiel kann die zentrale Kommunikationseinheit 310 auf einer Steuereinheit bzw. einem Steuergerät realisiert sein, die mit ein oder mehreren weiteren Steuereinheiten und/oder Steuergeräten 320 im Fahrzeug 210 kommunikativ verbunden ist, welche ausgebildet sind, die Fahrzeugfunktion 330, 340, 350, 360, 370, 380 zu steuern bzw. zu regeln.

Vorteilhafter Weise kann so jeder Nutzer des Ridesharing-Dienstes des Backend-Servers 240 Fahrzeugfunktionen 330, 340, 350, 360, 370, 380 einer Vielzahl von Fahrzeugen 210 dynamisch und sicher über den Backend-Server 240 bei bzw. unmittelbar vor der Nutzung des Ridesharing-Dienstes steuern bzw. regeln.

Für den Fall, dass eine oder mehrere Fahrzeugfunktionen 330, 340, 350, 360, 370, 380 - beispielsweise aufgrund eines Fehlens dieser Fahrzeugfunktion 330, 340, 350, 360, 370, 380 im ausgewählten Fahrzeug 210 und/oder einer Fehlfunktion einer oder mehrerer der die Fahrzeugfunktion bereitstellenden Komponenten - nicht steuer- bzw. regelbar ist bzw. sind, kann die zentrale Kommunikationseinheit 310 eine entsprechende Nachricht über den Backend-Server 240 Endgerät 230. Dem Nutzer des Endgeräts 230 hat dann die Möglichkeit zur Verfügung gestellt werden, die Nutzung des Ridesharing-Dienstes trotz der nicht vorhandenen Fahrzeugfunktion(en) 330, 340, 350, 360, 370, 380 über den Backend-Server 240 zu bestätigen bzw. ein anderes Fahrzeug 210, welches die entsprechende Fahrzeugfunktion(en) 330, 340, 350, 360, 370, 380 bereitstellt, für die Nutzung des Ridesharing-Dienstes auszuwählen (nicht gezeigt).

Schritt 140: Der Backend-Server 240 kann die Fahr-Response empfangen und an das Endgerät weiterleiten.

Schritt 150: Das Endgerät 230 kann die Fahr-Response empfangen, verarbeiten und über eine Ausgabeeinheit im Endgerät 230 anzeigen.

**Figur 2** zeigt ein beispielhaftes System 200 zur dynamischen Steuerung und/oder Regelung von Fahrzeugfunktionen einer Vielzahl von Fahrzeugen 210. Wie bereits oben erwähnt, können die Fahrzeuge 210 einer Ridesharing-Fahrzeugflotte angehören. Dabei kann es zwingend erforderlich sein, dass sich jedes Fahrzeug 210 einmalig beim Backend-Server 240 registriert. Vorteilhafter Weise wird es somit den Nutzern von Ridesharing-Diensten ermöglicht, freigeschaltete (also über das Endgerät 230 manipulierbare, d.h. steuer- und/oder regelbare) Fahrzeugfunktionen 330, 340, 350, 360, 370, 380 gemäß ihren persönlichen Vorlieben bzw. Anforderungen zu steuern bzw. zu regeln. Dadurch erhöht sich auch der Komfort der Nutzer der Ridesharing-Dienste.

Jedes Fahrzeug 210 der Vielzahl von Fahrzeugen 210 weist eine zentrale Kommunikationseinheit 310 auf. Die Zentrale Kommunikationseinheit umfasst zumindest ein Teilnehmeridentitätsmodul bzw. ein Subscriber Identity Module bzw. eine SIM-Karte, welches dazu dient, eine Kommunikationsverbindung über ein Mobilfunksystem aufbauen zu können. Das Teilnehmeridentitätsmodul identifiziert dabei die Kommunikationseinheit 310 eindeutig im Mobilfunknetz. Jede zentrale Kommunikationseinheit 310 kann dabei eingerichtet sein, lediglich eine Kommunikationsverbindung mit dem Backend-Server 240 bzw. Server 240 aufbauen zu können bzw. zuzulassen. Vorteilhafter Weise kann so sichergestellt werden, dass lediglich über den Backend-Server 240 eingehende Fahr-Requests umfassend zumindest eine Anforderung zur Steuerung und/oder Regelung zumindest einer Fahrzeugfunktion 330, 340, 350, 360, 370, 380 die Steuerung und/oder Regelung der entsprechenden Fahrzeugfunktion 330, 340, 350, 360, 370, 380 im ausgewählten Fahrzeug 210 steuern und/oder regeln können.

Es kann eine vorherige, einmalige Registrierung jedes Fahrzeugs 210 der Vielzahl von Fahrzeugen 210 am Backend-Server 240 erforderlich sein. Dadurch wird die Sicherheit erhöht, da nicht autorisierte Manipulationen der entsprechenden Fahrzeugfunktionen 330, 340, 350, 360, 370, 380 verhindert werden. Bei dem einmaligen Registrierungsvorgang können technische Parameter des Fahrzeugs 210 und optional weitere, je nach Kontext erforderliche Daten (z.B. Daten hinsichtlich eines Besitzers und/oder Fahrers des entsprechenden Fahrzeugs) erfasst und in einer Speichereinheit, z.B. einer Datenbank 250 und/oder 260, hinterlegt werden. Bei den technischen Parametern kann es sich insbesondere um technische Parameter mit Bezug auf die Fahrzeugfunktionen 330, 340, 350, 360, 370, 380 handeln. Vorteilhafter Weise kann dadurch bereits am Backend-Server 240 für jedes Fahrzeug 210 erfasst und hinterlegt werden, welche manipulierbaren (d.h. steuer- und/oder regelbaren) Fahrzeugfunktionen 330, 340, 350, 360 das Fahrzeug 210 bereitstellt.

Jedes Fahrzeug 210 kann dem Backend-Server 240 seine aktuelle Position, z.B. über die zentrale Kommunikationseinheit 310, die ein entsprechendes Positionsbestimmungsmodul, z.B. GPS-Modul, aufweisen kann (nicht gezeigt), in vorbestimmbaren bzw. vorbestimmten zeitlichen Abständen (z.B. jede Minute, alle 5 Minuten, etc.) und/oder zu vorbestimmbaren bzw. vorbestimmten Ereignissen (z.B. Fahrzeugstart, Fahrzeugstopp, Beginn einer Fahrt, Ende einer Fahrt, etc.) senden bzw. übermitteln. Vorteilhafter Weise kennt so der Backend-Server 240 stets die aktuelle Position aller registrierten Fahrzeuge 210.

Bei dem Backend-Server 240 kann es sich um einen Carsharing-Dienstanbieter, insbesondere aber einen Ridesharing-Dienstanbieter handeln, der Ridesharing-Dienste einer Vielzahl von registrierten Fahrzeugen 210 über ein geeignetes Kommunikationssystem (z.B. Mobilfunknetz und/oder Internet) bereitstellt. Um einen Ridesharing-Dienst zu nutzen, kann es zwingend erforderlich sein, dass sich jeder Nutzer des Ridesharing-Dienstes, zunächst einmalig über ein Endgerät 230 bei dem Backend-Server 240 registriert, wobei entsprechende Daten des Nutzers (z.B. Nutzer-Credentials, Zahlungsdaten, etc.) erfasst und in einer entsprechenden Speichereinheit, z.B. einer Datenbank 250 und/oder 260, hinterlegt werden können.

Bei dem Endgerät 230 kann es sich um ein stationäres Endgerät 230, um ein mobiles Endgerät 230, um eine AR, VR, oder MR-Brille oder um AR, VR, oder MR-Kontaktlinsen (nicht gezeigt) handeln.

Nach erfolgreich abgeschlossenem, einmaligen Registrierungsvorgang der Vielzahl von Fahrzeugen 210 sowie zumindest eines Nutzers des Ridesharing-Dienstes am Backend-Server 240 kann sich jeder Nutzer über jedes beliebige Endgerät 230 einloggen (Nutzer-Credentials) und über das Endgerät 230 einen Fahr-Request an den Backend-Server 240 senden.

Der Fahr-Request umfasst zumindest eine Startposition sowie zumindest eine Anforderung zur Steuerung und/oder Regelung zumindest einer Fahrzeugfunktion. Beispielsweise kann die Vielzahl von (entsprechend registrierten und fahrbereiten Fahrzeugen 210) über eine geeignete Ausgabeeinheit des Endgeräts 230 in einer vorbestimmten bzw. vorbestimmbaren geografischen Umgebung einer Startposition (z.B. Umkreis von 5 Kilometern), beispielsweise auf einer digitalen Karte, angezeigt werden. Beispielsweise kann der Nutzer des Ridesharing-Dienstes die Startposition mithilfe einer entsprechenden Mensch-Maschine-Schnittstelle im Endgerät 230 eingeben (z.B. da kein Positionsbestimmungsmodul, z.B. GPS, im Endgerät vorhanden ist und/oder wenn die Startposition von einer aktuellen Position des Endgeräts abweicht). In einem anderen Beispiel kann die Startposition die aktuelle geografische Position des Nutzers des Ridesharing-Dienstes sein, welche von einem auf bzw. in dem Endgerät 230 umfassten Positionsbestimmungsmodul (z.B. GPS-Modul, nicht gezeigt) ermittelt und entsprechend übernommen wird. Der Nutzer des Ridesharing-Dienstes kann darüber hinaus einen Fahrzeugtyp über das Endgerät 230 auswählen.

In einem weiteren Schritt können dem Nutzer des Ride-Sharing-Dienstes Fahrzeugfunktionen 330, 340, 350, 360, 370, 380 die beispielsweise den in der Datenbank 250, 260 hinterlegten technischen Parametern des ausgewählten Fahrzeugtyps entsprechen, und die der Nutzer des Endgeräts nach seinen persönlichen Vorlieben manipulieren kann, über das Endgerät 230 angezeigt werden. Vorzugsweise umfassen die Fahrzeugfunktionen 330, 340, 350, 360, 370, 380 des Fahrzeugs 210:
- zumindest eine Klimatisierung bzw. Temperaturregelung 330;
- eine Steuerung des Radios 340;
- eine Steuerung von Multimediainhalten 340;
- zumindest eine Sitzheizung 360;
- zumindest eine Sitzbelüftung 360;
- zumindest eine Sitzkühlung 360;
- zumindest eine Sitzposition 350;
- zumindest einen Fahrmodus 370; und/oder
- ein Navigationssystem des Fahrzeugs 380.

Beispielsweise kann auf dem Endgerät 230 eine Liste von Fahrzeugfunktionen 330, 340, 350, 360, 370, 380 die beim ausgewählten Fahrzeugtyp manipuliert (d.h. gesteuert und/oder geregelt) werden können, über eine Ausgabeeinheit angezeigt werden. Der Nutzer des Endgeräts kann entsprechende Einstellungen vornehmen wie weiter unten mit Bezug auf **Figur 4** beschrieben, näher erläutert.

Beispielsweise kann der Nutzer eine gewünschte Fahrzeuginnenraumtemperatur 330 über eine entsprechende Eingabeschnittstelle am Endgerät 230 eingeben. Im durch den Backend-Server 240 ausgewählten Fahrzeug 210, das dem einem Nutzer über das Endgerät 230 ausgewählten Fahrzeugtyp entspricht, werden in der Folge (wie gleich weiter untern näher erläutert) Heizung und/oder Klimaanlage derart geregelt, dass die gewünschte Fahrzeuginnenraumtemperatur erreicht und beibehalten wird. Darüber hinaus oder alternativ dazu kann der Nutzer des Endgeräts einen gewünschten Radiosender 240 und optional eine gewünschte Lautstärke eingeben. Ein Radiomodul im ausgewählten Fahrzeug 210 wird dann derart gesteuert, dass der gewünschte Radiosender und optional die entsprechende Lautstärke eingestellt werden. Darüber hinaus oder alternativ dazu kann der Nutzer des Endgeräts 230 weitere Multimedia-Inhalte 340 auswählen. Die entsprechende Multimedia-Einheit(en) im Fahrzeug wird (werden) dann derart gesteuert, dass der entsprechende Multimedia-Inhalt gestartet und/oder eingestellt wird. Darüber hinaus oder alternativ dazu kann der Nutzer des Endgeräts 230 eingeben, dass er eine Sitzheizung 230 und/oder eine Sitzbelüftung 260 und/oder eine Sitzkühlung 260 und/oder eine bestimmte Sitzeinstellung 250 wünscht. Die entsprechenden, die Funktionalität bereitstellenden Einheiten (z.B. Steuergeräte bzw. Software-Module, die Teil eines zentralen Steuergeräts sind) im Fahrzeug 210 werden dann derart gesteuert, dass die Fahrzeugfunktion entsprechend eingestellt wird. Darüber hinaus oder alternativ dazu kann der Nutzer des Endgeräts 230 einen bestimmten Fahrmodus 370, z.B. "komfortables Fahren", "dynamisches Fahren", etc. eingeben. Das entsprechende, die Funktionalität bereitstellende Steuermodul im Fahrzeug 210 kann dann das Einstellen des entsprechenden Fahrmodus im Fahrzeug 210 steuern. Darüber hinaus oder alternativ dazu kann der Nutzer des Ridesharing-Dienstes eine Zielposition 380 eingeben. Die Zielposition kann dann automatisch durch das Navigationssystem des Fahrzeugs 210 über eine entsprechende Steuereinheit im Fahrzeug 210 übernommen werden. Es handelt sich hierbei lediglich um beispielhafte Fahrzeugfunktionen 330, 340, 350, 360, 370, 380, es können alle geeigneten, gängigen und künftigen Fahrzeugfunktionen zu der o.g. Aufzählung hinzugefügt werden. Jede der Fahrzeugunktionen 330, 340, 350, 360, 370, 380 kann beim einmaligen Registrierungsvorgang beim Backend-Server 240 über die technischen Parameter des Fahrzeugs 210 erfasst und über das Endgerät 230 ausgegeben werden werden.

Somit können Nutzer über das Endgerät 230 nun zumindest eine Manipulation der entsprechenden Fahrzeugfunktionen 330, 340, 350, 360, 370, 380 einer Vielzahl von Fahrzeugen 210 vornehmen. Dieser Vorgang entspricht einer Anforderung zur Steuerung und/oder Regelung der zumindest einen Fahrzeugfunktion 330, 340, 350, 360, 370, 380.

Das Endgerät 230 erstellt nun basierend auf dem ausgewählten Fahrzeugtyp und der Anforderung zur Steuerung und/oder Regelung der zumindest einen Fahrzeugfunktion 330, 340, 350, 360, 370, 380 einen Fahr-Request umfassend die Startposition sowie die Anforderung zur Steuerung und/oder Regelung der zumindest einen Fahrzeugfunktion 330, 340, 350, 360, 370, 380 und sendet diesen an den Backend-Server 240. Der Backend-Server 240 wird nun ein Fahrzeug 210 aus der Vielzahl von Fahrzeugen 210 entsprechend dem (durch den Nutzer über das Endgerät 230 ausgewählten) Fahrzeugtyp auswählen, eine Fahr-Anforderung umfassend zumindest die Anforderung zur Steuerung und/oder Regelung der zumindest einen Fahrzeugfunktion 330, 340, 350, 360, 370, 380 erstellen und an die zentrale Kommunikationseinheit 310 des ausgewählten Fahrzeugs 210 senden. Die zentrale Kommunikationseinheit 310 wird die Fahr-Anforderung entsprechend verarbeiten und die zumindest eine Fahrzeugfunktion 330, 340, 350, 360, 370, 380 entsprechend der Anforderung zur Steuerung und/oder Regelung der zumindest einen Fahrzeugfunktion 330, 340, 350, 360, 370, 380 steuern und/oder regeln. Die zentrale Kommunikationseinheit 310 kann beispielsweise auf einer Steuereinheit bzw. einem Steuergerät realisiert sein, die in der Lage ist, die entsprechenden Fahrzeugfunktionen 330, 340, 350, 360, 370, 380 zu steuern bzw. zu regeln. In einem anderen Beispiel kann die zentrale Kommunikationseinheit 310 auf einer Steuereinheit bzw. einem Steuergerät realisiert sein, die mit ein oder mehreren weiteren Steuereinheiten 320 und/oder Steuergeräten 320 im Fahrzeug 210 kommunikativ verbunden ist, welche ausgebildet sind, die Fahrzeugfunktionen 330, 340, 350, 360, 370, 380 zu steuern bzw. zu regeln.

Die Fahr-Anforderung des Backend-Servers 240 kann zudem die Startposition, umfassen, so dass das ausgewählte Fahrzeug 210 zur Startposition bewegt werden kann. Bei den Fahrzeugen 210, die beim Backend-Server 240 einmalig registriert sind, kann es sich um Fahrzeuge 210 handeln, die einen Fahrer zum Bewegen des Fahrzeugs 210 erfordern. Darüber hinaus oder alternativ dazu kann es sich bei den Fahrzeugen 210 um Fahrzeuge 210 handeln, die zumindest einen zumindest teil-autonomen Fahrmodus aufweisen. Durch die Übermittlung der Startposition mit der Fahr-Anforderung des Backend-Server 240 kann der Fahrer des entsprechenden Fahrzeuges 210 das Fahrzeug an die Startposition bewegen bzw. fahren, um dem Nutzer des Ridesharing-Dienstes diesen zur Verfügung zu stellen. Fahrzeuge 210 mit einem voll-autonomen Fahrmodus können sich nach Übermittlung der Startposition vollautonom an die Startposition bewegen bzw. fahren, um dem Nutzer des Ridesharing-Dienstes diesen zur Verfügung zu stellen. Wie bereits oben ausgeführt, kann es sich bei der Startposition um eine geografische Position, z.B. GPS-Position, handeln, die der Nutzer des Ridesharing-Dienstes entweder manuell eingegeben und/oder durch ein Positionsbestimmungsmodul (z.B. GPS-Modul des Endgeräts) automatisch übernommen wurde.

Darüber hinaus können der Fahr-Request und die Fahr-Anforderung zudem einen Startzeitpunkt umfassen, so dass das ausgewählte Fahrzeug 210 zum Startzeitpunkt an die Startposition bewegt werden kann.

Falls der Nutzer des Endgeräts 230 nicht sofort, sondern erst zu einem späteren Zeitpunkt den Ridesharing-Dienst (entweder selbst, oder durch eine andere Person) nutzen möchte, kann der Nutzer zudem einen Startzeitpunkt (z.B. über eine entsprechende Datums- und Uhrzeiteingabe über das Endgerät 230) eingeben. Vorteilhafter Weise können so Fahrten mit dem Ridesharing-Dienst frühzeitig geplant werden.

Vorteilhafter Weise kann so der Nutzer des Endgeräts 230 Fahrzeugfunktionen 330, 340, 350, 360, 370, 380 einer Vielzahl von Fahrzeugen 210 sicher über den Backend-Server 240 bei bzw. unmittelbar vor der Nutzung des Ridesharing-Dienstes über das Endgerät 230 steuern bzw. regeln.

Für den Fall, dass eine entsprechende Fahrzeugfunktion 330, 340, 350, 360, 370, 380 - beispielsweise aufgrund einer Fehlfunktion einer oder mehrerer der die Fahrzeugfunktion 330, 340, 350, 360, 370, 380 bereitstellenden Komponenten - nicht steuer- bzw. regelbar sind, kann die zentrale Kommunikationseinheit 310 eine entsprechende Nachricht generieren und über den Backend-Server 240 an das Endgerät 230 übertragen bzw. senden. Dem Nutzer des Endgeräts 230 kann dann die Möglichkeit bereitgestellt werden, die Nutzung des Ridesharing-Dienstes trotz der nicht vorhandenen Fahrzeugfunktion 330, 340, 350, 360, 370, 380 über den Backend-Server 240 zu bestätigen bzw. ein anderes Fahrzeug 210, welches die entsprechende Fahrzeugfunktion 330, 340, 350, 360, 370, 380 bereitstellen kann, die über das Endgerät 230 manipulierbar sind.

Insbesondere für eine Fahrzeugflotte, die sich aus voll-autonom fahrenden Fahrzeugen zusammensetzt, ist das o.g. Verfahren 100 und System 200 besonders vorteilhaft, da eine Personalisierung komplett fahrerunabhängig realisiert werden kann.

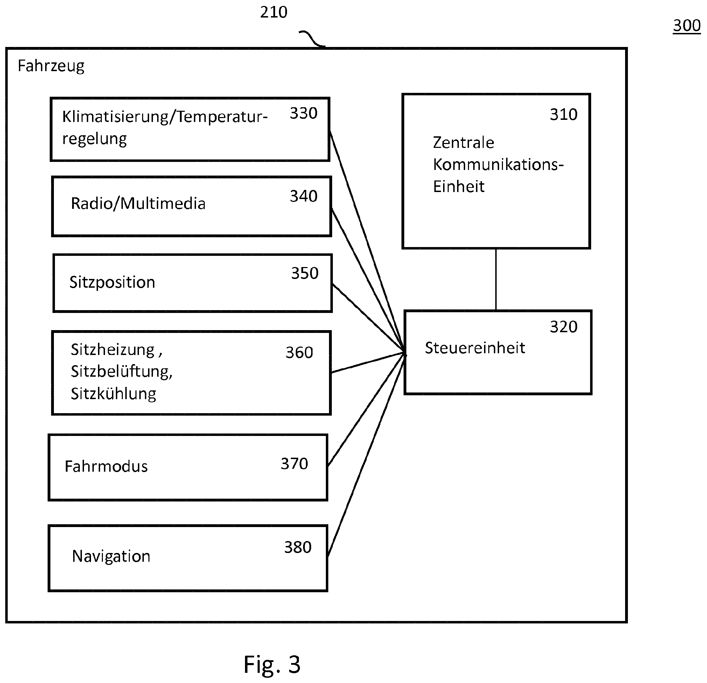

**Figur 3** zeigt eine beispielhafte Anordnung von Fahrzeugmodulen, auf denen die Fahrzeugfunktionen 330, 340, 350, 360, 370, 380, auf denen die Fahrzeugfunktionen hardware- und/oder softwaretechnisch realisiert sind, mit Bezug auf die zentrale Kommunikationseinheit 310.

Wie bereits mit Bezug auf **Figur 1** und **2** erwähnt, umfasst jedes Fahrzeug 210 eine zentrale Kommunikationseinheit 310. Die zentrale Kommunikationseinheit 310 kann als Steuereinheit als Softwaremodul eines Steuergeräts oder auf einem eigenen Steuergerät realisiert sein. Sie kann ausgebildet sein, die Module, auf denen die Fahrzeugfunktionen 330, 340, 350, 360, 370, 380 realisiert sind, zu steuern und/oder zu regeln. In einem anderen Beispiel kann die zentrale Kommunikationseinheit 310 ein oder mehrere Steuereinheiten 320, die ausgebildet sind, entsprechende Fahrzeugfunktionen 330, 340, 350, 360, 370, 380 zu steuern bzw. zu regeln, kommunikativ verbunden sein, und die entsprechenden Steuer- und/oder Regelbefehle an die ein oder mehreren Steuereinheiten 320 weiterleiten.

**Figur 4** zeigt ein beispielhaftes Endgerät 230 sowie beispielhafte Eingabefelder 422, 424, 426 für die Steuerung von Fahrzeugfunktionen 330, 340, 350, 360, 370, 380 einer Vielzahl von Fahrzeugen 210 wie weiter oben mit Bezug auf die **Figuren 1****,** **2** und **3** beschrieben. Auf dem Endgerät 230 werden auf einer digitalen Karte 215 verfügbare Fahrzeuge 210 und/oder Fahrzeugtypen angezeigt. Für einen ausgewählten Fahrzeugtyp ist ein Teil der über das Endgerät 230 auswählbaren Fahrzeugfunktionen in einer Drop-Down-Liste 420 angezeigt. Insbesondere kann eine "Bitte nicht Stören"-Fahrzeugfunktion 422 ausgewählt werden. Darüber hinaus kann ein verfügbarer Radiosender als Fahrzeugfunktion 424 ausgewählt werden. In einem nächsten Feld 426 kann die Innenraumtemperatur als Fahrzeugfunktion 330, 340, 350, 360, 370, 380 ausgewählt werden.

## Patentansprüche

1. System (200) zur dynamischen Steuerung und/oder Regelung von Fahrzeugfunktionen (330, 340, 350, 360, 370, 380) einer Vielzahl von Fahrzeugen (210) eines Ridesharing-Dienstes, wobei jedes Fahrzeug (210) eine zentrale Kommunikationseinheit (310) aufweist, umfassend:
zumindest einen Backend-Server (240);
zumindest ein Endgerät (230), das eingerichtet ist, einen Fahr-Request an den Backend-Server (240) zu senden, wobei der Fahr-Request zumindest eine Startposition, eine Auswahl eines Fahrzeugtyps aus der Vielzahl von Fahrzeugen (210) sowie zumindest eine Anforderung zur Steuerung und/oder Regelung zumindest einer Fahrzeugfunktion (330, 340, 350, 360, 370, 380) entsprechend einer Nutzereingabe in eine Eingabeschnittstelle am Endgerät (230) umfasst;
wobei der Backend-Server (240) eingerichtet ist, nach Empfangen des Fahr-Requests ein Fahrzeug (210) entsprechend dem Fahrzeugtyp auszuwählen und eine Fahr-Anforderung umfassend die Anforderung zur Steuerung und/oder Regelung der zumindest einen Fahrzeugfunktion (330, 340, 350, 360, 370, 380) an die zentrale Kommunikationseinheit (310) des ausgewählten Fahrzeugs (210) zu senden; und
wobei die zumindest eine Fahrzeugfunktion (330, 340, 350, 360, 370, 380) des ausgewählten Fahrzeugs (210) entsprechend der Anforderung zur Steuerung und Regelung im Fahrzeug-Request gesteuert und/oder geregelt wird,
wobei, für den Fall, dass eine entsprechende Fahrzeugfunktion (330, 340, 350, 360, 370, 380) nicht steuer- bzw. regelbar ist, die zentrale Kommunikationseinheit (310) eine entsprechende Nachricht generiert und über den Backend-Server (240) an das Endgerät (230) ausgibt, wobei einem Nutzer des Endgeräts (230) dann die Möglichkeit bereitgestellt wird, die Nutzung des Ridesharing-Dienstes trotz der nicht vorhandenen Fahrzeugfunktion (330, 340, 350, 360, 370, 380) über den Backend-Server (240) zu bestätigen oder ein anderes Fahrzeug (210), welches die entsprechende Fahrzeugfunktion (330, 340, 350, 360, 370, 380) bereitstellen kann, die Nutzung des Ridesharing-Dienstes auszuwählen.

2. System (200) nach Anspruch 1, wobei die zumindest eine Fahrzeugfunktion (330, 340, 350, 360, 370, 380) des Fahrzeugs (210) umfasst:
- zumindest eine Klimatisierung bzw. Temperaturregelung (330);
- eine Steuerung des Radios (340);
- eine Steuerung von Multimediainhalten (340);
- zumindest eine Sitzheizung (360);
- zumindest eine Sitzbelüftung (360);
- zumindest eine Sitzkühlung (360);
- zumindest eine Sitzposition (350);
- zumindest einen Fahrmodus (370); und/oder
- ein Navigationssystem (380).

3. System (200) nach Anspruch 1 oder 2, wobei die Fahr-Anforderung des Backend-Servers (240) zudem die Startposition umfasst, so dass das ausgewählte Fahrzeug (210) zur Startposition bewegt werden kann.

4. System (200) nach Anspruch 3, wobei der Fahr-Request sowie die Fahr-Anforderung zudem einen Startzeitpunkt umfassen, so dass sich das ausgewählte Fahrzeug (210) zum Startzeitpunkt an die Startposition bewegt werden kann.

5. System (200) nach einem der vorangehenden Ansprüche, wobei die Vielzahl von Fahrzeugen (210) einer Ridesharing-Fahrzeugflotte zugehören.

6. Verfahren (100) zur dynamischen Steuerung und/oder Regelung von Fahrzeugfunktionen (330, 340, 350, 360, 370, 380) einer Vielzahl von Fahrzeugen (210) eines Ridesharing-Dienstes, wobei jedes Fahrzeug (210) eine zentrale Kommunikationseinheit (310) aufweist, umfassend:
Empfangen (110), an einem Backend-Server (240) eines Fahr-Requests von einem Endgerät (230), wobei der Fahr-Request zumindest eine Startposition, eine Auswahl eines Fahrzeugtyps aus der Vielzahl von Fahrzeugen (210) sowie zumindest eine Anforderung zur Steuerung und/oder Regelung zumindest einer Fahrzeugfunktion (330) entsprechend einer Nutzereingabe in eine Eingabeschnittstelle am Endgerät (230) umfasst;
Auswählen, durch den Backend-Server (240), eines Fahrzeugs (210), das dem Fahrzeugtyp entspricht;
Erstellen (122) und Senden einer Fahr-Anforderung umfassend die Anforderung zur Steuerung und/oder Regelung der zumindest einen Fahrzeugfunktion (330, 340, 350, 360, 370, 380) an die zentrale Kommunikationseinheit (310) des ausgewählten Fahrzeugs (210); und
Automatisches Steuern und/oder Regeln (134) der zumindest einen Fahrzeugfunktion (330, 340, 350, 360, 370, 380) im ausgewählten Fahrzeug (210) entsprechend der am ausgewählten Fahrzeug (210) empfangenen Anforderung,
wobei, für den Fall, dass eine entsprechende Fahrzeugfunktion (330, 340, 350, 360, 370, 380) nicht steuer- bzw. regelbar ist, kann die zentrale Kommunikationseinheit (310) eine entsprechende Nachricht generiert und über den Backend-Server (240) an das Endgerät (230) ausgibt, wobei einem Nutzer des Endgeräts (230) dann die Möglichkeit bereitgestellt wird, die Nutzung des Ridesharing-Dienstes trotz der nicht vorhandenen Fahrzeugfunktion (330, 340, 350, 360, 370, 380) über den Backend-Server (240) zu bestätigen oder ein anderes Fahrzeug (210), welches die entsprechende Fahrzeugfunktion (330, 340, 350, 360, 370, 380) bereitstellen kann, die Nutzung des Ridesharing-Dienstes auszuwählen.

7. Verfahren (100) gemäß Anspruch 6, wobei die zumindest eine Fahrzeugfunktion (330, 340, 350, 360, 370, 380) umfasst:
- zumindest eine Klimatisierung bzw. Temperaturregelung (330);
- eine Steuerung des Radios (340);
- eine Steuerung von Multimediainhalten (340);
- zumindest eine Sitzheizung (360);
- zumindest eine Sitzbelüftung (360);
- zumindest eine Sitzkühlung (360);
- zumindest eine Sitzposition (350);
- zumindest einen Fahrmodus (370); und/oder
- ein Navigationssystem (380).

8. Verfahren (100) gemäß einem der Ansprüche 6 oder 7, wobei die Fahr-Anforderung des Backend-Servers (240) zudem die Startposition umfasst, so dass das ausgewählte Fahrzeug (210) zur Startposition bewegt werden kann.

9. Verfahren (100) gemäß Anspruch 8, wobei der Fahr-Request sowie die Fahr-Anforderung zudem einen Startzeitpunkt umfassen, so dass sich das ausgewählte Fahrzeug (210) zum Startzeitpunkt an die Startposition bewegt werden kann.

10. Verfahren (100) gemäß einem der Ansprüche 6 bis 9, wobei die Vielzahl von Fahrzeugen (210) einer Ridesharing-Fahrzeugflotte zugehören.

## Claims

1. System (200) for dynamically controlling and/or regulating vehicle functions (330, 340, 350, 360, 370, 380) of a multiplicity of vehicles (210) of a ride-sharing service, each vehicle (210) having a central communication unit (310), comprising:
at least one backend server (240);
at least one terminal (230) which is configured to send a driving request to the backend server (240), wherein the driving request comprises at least one starting position, a selection of a vehicle type from the multiplicity of vehicles (210) and at least one requirement to control and/or regulate at least one vehicle function (330, 340, 350, 360, 370, 380) according to a user input into an input interface on the terminal (230);
wherein the backend server (240) is configured, after receiving the driving request, to select a vehicle (210) corresponding to the vehicle type and to send a drive requirement comprising the requirement to control and/or regulate the at least one vehicle function (330, 340, 350, 360, 370, 380) to the central communication unit (310) of the selected vehicle (210); and
wherein the at least one vehicle function (330, 340, 350, 360, 370, 380) of the selected vehicle (210) is controlled and/or regulated according to the control and regulation requirement in the vehicle request,
wherein, if a corresponding vehicle function (330, 340, 350, 360, 370, 380) cannot be controlled and/or regulated, the central communication unit (310) generates a corresponding message and outputs it via the backend server (240) to the terminal (230), wherein a user of the terminal (230) is then provided with the possibility of confirming the use of the ride-sharing service despite the unavailable vehicle function (330, 340, 350, 360, 370, 380) via the backend server (240), or selecting another vehicle (210), which can provide the corresponding vehicle function (330, 340, 350, 360, 370, 380), for the use of the ride-sharing service.

2. System (200) according to Claim 1, wherein the at least one vehicle function (330, 340, 350, 360, 370, 380) of the vehicle (210) comprises:
- at least one air conditioning or temperature regulation means (330);
- control of the radio (340);
- control of multimedia content (340);
- at least one seat heating means (360);
- at least one seat ventilation means (360);
- at least one seat cooling means (360);
- at least one seat position (350);
- at least one driving mode (370); and/or
- a navigation system (380).

3. System (200) according to Claim 1 or 2, wherein the drive requirement from the backend server (240) also comprises the starting position, so that the selected vehicle (210) can be moved to the starting position.

4. System (200) according to Claim 3, wherein the driving request and the drive requirement also comprise a starting time, so that the selected vehicle (210) can be moved to the starting position at the starting time.

5. System (200) according to one of the preceding claims, wherein the multiplicity of vehicles (210) belong to a ride-sharing vehicle fleet.

6. Method (100) for dynamically controlling and/or regulating vehicle functions (330, 340, 350, 360, 370, 380) of a multiplicity of vehicles (210) of a ride-sharing service, each vehicle (210) having a central communication unit (310), comprising:
receiving (110), in a backend server (240), a driving request from a terminal (230), wherein the driving request comprises at least one starting position, a selection of a vehicle type from the multiplicity of vehicles (210) and at least one requirement to control and/or regulate at least one vehicle function (330) according to a user input into an input interface on the terminal (230);
selecting, by means of the backend server (240), a vehicle (210) corresponding to the vehicle type;
creating (122) and sending a drive requirement comprising the requirement to control and/or regulate the at least one vehicle function (330, 340, 350, 360, 370, 380) to the central communication unit (310) of the selected vehicle (210); and
automatically controlling and/or regulating (134) the at least one vehicle function (330, 340, 350, 360, 370, 380) in the selected vehicle (210) according to the requirement received in the selected vehicle (210),
wherein, if a corresponding vehicle function (330, 340, 350, 360, 370, 380) cannot be controlled and/or regulated, the central communication unit (310) generates a corresponding message and outputs it via the backend server (240) to the terminal (230), wherein a user of the terminal (230) is then provided with the possibility of confirming the use of the ride-sharing service despite the unavailable vehicle function (330, 340, 350, 360, 370, 380) via the backend server (240), or selecting another vehicle (210), which can provide the corresponding vehicle function (330, 340, 350, 360, 370, 380), for the use of the ride-sharing service.

7. Method (100) according to Claim 6, wherein the at least one vehicle function (330, 340, 350, 360, 370, 380) comprises:
- at least one air conditioning or temperature regulation means (330);
- control of the radio (340);
- control of multimedia content (340);
- at least one seat heating means (360);
- at least one seat ventilation means (360);
- at least one seat cooling means (360);
- at least one seat position (350);
- at least one driving mode (370); and/or
- a navigation system (380).

8. Method (100) according to either of Claims 6 and 7, wherein the drive requirement from the backend server (240) also comprises the starting position, so that the selected vehicle (210) can be moved to the starting position.

9. Method (100) according to Claim 8, wherein the driving request and the drive requirement also comprise a starting time, so that the selected vehicle (210) can be moved to the starting position at the starting time.

10. Method (100) according to one of Claims 6 to 9, wherein the multiplicity of vehicles (210) belong to a ride-sharing vehicle fleet.

## Revendications

1. Système (200) de commande et/ou de régulation dynamique de fonctions de véhicule (330, 340, 350, 360, 370, 380) d'une pluralité de véhicules (210) d'un service de covoiturage, chaque véhicule (210) comportant une unité de communication centrale (310), comprenant :
au moins un serveur dorsal (240) ;
au moins un terminal (230) qui est configuré pour envoyer une requête de trajet au serveur dorsal (240), la requête de trajet comprenant au moins une position de départ, une sélection d'un type de véhicule parmi la pluralité de véhicules (210) ainsi qu'au moins une demande de commande et/ou de régulation d'au moins une fonction de véhicule (330, 340, 350, 360, 370, 380) correspondant à une saisie d'utilisateur sur une interface de saisie du terminal (230) ;
le serveur dorsal (240) étant configuré, après réception de la requête de trajet, pour sélectionner un véhicule (210) correspondant au type de véhicule et pour envoyer une demande de trajet comprenant la demande de commande et/ou de régulation de l'au moins une fonction de véhicule (330, 340, 350, 360, 370, 380) à l'unité de communication centrale (310) du véhicule (210) sélectionné ; et
l'au moins une fonction de véhicule (330, 340, 350, 360, 370, 380) du véhicule (210) sélectionné étant commandée et/ou régulée conformément à la demande de commande et de régulation dans la requête de véhicule,
dans lequel, dans le cas où une fonction de véhicule (330, 340, 350, 360, 370, 380) correspondante ne peut pas être commandée ou régulée, l'unité de communication centrale (310) génère un message correspondant et le délivre au terminal (230) par l'intermédiaire du serveur dorsal (240), un utilisateur du terminal (230) ayant alors la possibilité de confirmer par l'intermédiaire du serveur dorsal (240) l'utilisation du service de covoiturage malgré l'absence de la fonction de véhicule (330, 340, 350, 360, 370, 380) ou de sélectionner un autre véhicule (210) qui peut fournir la fonction de véhicule (330, 340, 350, 360, 370, 380) correspondante, ou de sélectionner l'utilisation du service de covoiturage.

2. Système (200) selon la revendication 1, l'au moins une fonction de véhicule (330, 340, 350, 360, 370, 380) du véhicule (210) comprenant :
- au moins une climatisation ou régulation de température (330) ;
- une commande de la radio (340) ;
- une commande de contenus multimédia (340) ;
- au moins un chauffage de siège (360) ;
- au moins une ventilation de siège (360) ;
- au moins un refroidissement de siège (360) ;
- au moins une position de siège (350) ;
- au moins un mode de conduite (370) ; et/ou
- un système de navigation (380).

3. Système (200) selon la revendication 1 ou 2, la demande de trajet du serveur dorsal (240) comprenant en outre la position de départ, de sorte que le véhicule (210) sélectionné peut être déplacé vers la position de départ.

4. Système (200) selon la revendication 3, la requête de trajet ainsi que la demande de trajet comprenant en outre un moment de départ, de sorte que le véhicule (210) sélectionné peut être déplacé vers la position de départ au moment du départ.

5. Système (200) selon l'une quelconque des revendications précédentes, la pluralité de véhicules (210) appartenant à une flotte de véhicules de covoiturage.

6. Procédé (100) de commande et/ou de régulation dynamique de fonctions de véhicule (330, 340, 350, 360, 370, 380) d'une pluralité de véhicules (210) d'un service de covoiturage, chaque véhicule (210) comportant une unité de communication centrale (310), comprenant :
la réception (110), au niveau d'un serveur dorsal (240), d'une requête de trajet en provenance d'un terminal (230), la requête de trajet comprenant au moins une position de départ, une sélection d'un type de véhicule parmi la pluralité de véhicules (210) ainsi qu'au moins une demande de commande et/ou de régulation d'au moins une fonction de véhicule (330) correspondant à une saisie d'utilisateur sur une interface d'entrée du terminal (230) ;
la sélection, par le serveur dorsal (240), d'un véhicule (210) qui correspond au type de véhicule ;
la création (122) et l'envoi d'une demande de trajet comprenant la demande de commande et/ou de régulation de l'au moins une fonction de véhicule (330, 340, 350, 360, 370, 380) à l'unité de communication centrale (310) du véhicule (210) sélectionné ; et
la commande et/ou la régulation automatique (134) de l'au moins une fonction de véhicule (330, 340, 350, 360, 370, 380) dans le véhicule (210) sélectionné conformément à la demande reçue sur le véhicule (210) sélectionné,
dans lequel, dans le cas où une fonction de véhicule (330, 340, 350, 360, 370, 380) correspondante ne peut pas être commandée ou régulée, l'unité de communication centrale (310) peut générer un message correspondant et le transmet au terminal (230) par l'intermédiaire du serveur dorsal (240), un utilisateur du terminal (230) ayant alors la possibilité de confirmer par l'intermédiaire du serveur dorsal (240) l'utilisation du service de covoiturage malgré l'absence de la fonction de véhicule (330, 340, 350, 360, 370, 380) ou de sélectionner un autre véhicule (210) qui peut fournir la fonction de véhicule (330, 340, 350, 360, 370, 380) correspondante, ou de sélectionner l'utilisation du service de covoiturage.

7. Procédé (100) selon la revendication 6, l'au moins une fonction de véhicule (330, 340, 350, 360, 370, 380) comprenant :
- au moins une climatisation ou régulation de température (330) ;
- une commande de la radio (340) ;
- une commande de contenus multimédia (340) ;
- au moins un chauffage de siège (360) ;
- au moins une ventilation de siège (360) ;
- au moins un refroidissement de siège (360) ;
- au moins une position de siège (350) ;
- au moins un mode de conduite (370) ; et/ou
- un système de navigation (380).

8. Procédé (100) selon la revendication 6 ou 7, la demande de trajet du serveur dorsal (240) comprenant en outre la position de départ, de sorte que le véhicule (210) sélectionné peut être déplacé vers la position de départ.

9. Procédé (100) selon la revendication 8, la requête de trajet ainsi que la demande de trajet comprenant en outre un moment de départ, de sorte que le véhicule (210) sélectionné peut être déplacé vers la position de départ au moment du départ.

10. Procédé (100) selon l'une quelconque des revendications 6 à 9, la pluralité de véhicules (210) appartenant à une flotte de véhicules de covoiturage.
